# EUROPÄISCHE PATENTANMELDUNG

(11) **EP 1 612 519 A1**
(43) Veröffentlichungstag der Anmeldung: **04.01.2006**
(21) Anmeldenummer: 05012691.1
(22) Anmeldetag: 14.06.2005
(51) Int. Cl.: G01D 5/20, G01D 3/02, G05G 1/14, B60T 7/04, H01H 21/18, H01H 21/32, G05B 13/02

(54) **Sensoreinrichtung für eine physikalische Grösse bei einem Gerät**

(30) Priorität: 02.07.2004 DE 102004032075
(71) Anmelder: Methode Electronics Malta Ltd., Mriehel QRM 09 (MT)
(72) Erfinder: Slanec, Konrad, St. Julians SLM 05 (MT)
(74) Vertreter: Haft, von Puttkamer, Berngruber, Czybulka

(57) **Zusammenfassung**

Die Sensorwerte (s) einer Sensoreinrichtung (6) weisen im Lieferzustand um etwa 50% reduzierte Sensorwerte einer Lieferskalierung ds auf, die zugleich den Lieferzustand dokumentieren. Nach dem Einbau in ein Gerät wird mit dem Überschreiten eines Schwellwertes (t) ein Initialisierungs- und Justierprogramm der Sensoreinrichtung (6) gestartet in dessen Verlauf die Lieferskalierung (ds) in eine normale Betriebsskalierung (os) transformiert wird.

## Beschreibung

Die Erfindung bezieht sich auf eine Sensoreinrichtung zum Messen einer physikalischen Größe bei einem Gerät und ein Verfahren zum Justieren der Sensoreinrichtung, wobei ein ausgegebenes Sensorsignal zur Anpassung an den tatsächlichen Messbereich der Größe mittels einer Auswerteelektronik skalierbar ist.

Bei Automobilen ist es üblich, ein z.B. als Fußhebel ausgebildetes Stellglied mit einem Sensor zu koppeln, der die Winkelstellung des Hebels erfasst. Die Justage eines Positionssignals des Fußhebels erfolgt nach dem Einbau in das Automobil, indem in einer Anschlagstellung des Fußhebels über einen externen Signaleingang ein Hilfssignal gesetzt wird oder die Position des Sensors selbst mechanisch verstellt wird. Der in diesem Moment am Sensor anliegende Signalpegel wird dann als Ausgangswert abgespeichert und im späteren Betrieb subtrahiert oder kompensiert. Bei einer derartigen Korrektur ist es nachträglich nicht sicher möglich, anhand der Sensorwerte festzustellen, ob der Sensor endjustiert wurde oder nicht.

Der Erfindung liegt die Aufgabe zugrunde, die Prozesssicherheit der Justage zu erhöhen.

Diese Aufgabe wird durch die im Kennzeichen des Anspruchs 1 angegebenen Merkmale gelöst. Die Umstellung des Sensorsignals erfolgt durch die Sensorelektronik selbst, nachdem sämtliche erforderlichen Justierschritte durchgeführt wurden. Damit kann eine Kontrolleinrichtung jederzeit zuverlässig feststellen ob die Justierung vollständig vollzogen wurde. Eine z.B. in einem Automobil vorhandene Zentralsteuerung kann bei zu hohem Anfangswert das Losfahren unterbinden.

Vorteilhafte Weiterbildungen der Erfindung ergeben sich aus den in den Ansprüchen 2 bis 10 gekennzeichneten Merkmalen.

Die Veränderung der Trägerfrequenz nach Anspruch 2 stellt ein einfaches und zuverlässiges Mittel dar, um den Zustand des Sensors zuverlässig festzustellen. Die Lieferfrequenz kann dabei so eingestellt sein, dass ein ausgegebenes Signal von der Zentralsteuerung nicht verarbeitet werden kann.

Beim Sensor nach Abspruch 3 kann beispielsweise der untere Grenzwert der deformierten Lieferskalierung deutlich über dem einzustellenden maximalen unteren Grenzwert der endmontierten und endjustierten Sensoreinrichtung liegen. Die angepasste normale Betriebsskalierung des z.B. pulsweitenmodulierten Sensorsignals wird üblich auf einen Wert von 10% -90% eingestellt. Die Lieferskalierung beginnt z.B. bei 25% eindeutig oberhalb der Toleranzgrenze.

Durch die Weiterbildung nach Anspruch 4 ist es möglich, zunächst mit der z.B. linearisierten Lieferskalierung den obersten und untersten Messwert des eingebauten Sensors zu bestimmen und diese Messwerte auf die Grenzwerte von 10% bzw. 90% zu verschieben, ohne dabei die Charakteristik der Lieferskalierung zu verändern, so dass keine weiteren Zwischenwerte justiert werden müssen. Zusätzliche Vergleichsmessungen mittels zusätzlicher hinderlicher Messeinrichtungen werden dadurch überflüssig.

Bei der Weiterbildung nach Anspruch 5 kann die Betriebsskalierung in einfacher Weise annähernd proportional zur Lieferskalierung erweitert werden.

Die Sensoreinrichtung nach Anspruch 6 eignet sich besonders zur Positionsbestimmung eines Bedienorgans, z.B. zur Winkelbestimmung eines Pedals mit festen mechanischen Endanschlägen.

Die Kontrolleinrichtung nach Anspruch 7 ist z.B. Teil der Sensorelektronik, die auch den kompletten Justiervorgang autonom überwacht. Eine Verknüpfung mit anderen Testeinrichtungen ist nicht erforderlich.

Das Verfahren nach den Ansprüchen 8 und 9, ermöglicht eine einfache und sichere Justierung der Sensoreinrichtung. Beispielsweise wird nach dem Einschalten der Stromversorgung eine erste Pedalbetätigung über einen vorgegebenen oberen Schwellwert hinaus der Signalausgang auf das Verweilen in einer Haltestellung des Stellglieds überwacht. Wird dieser Wert zumindest ein weiteres Mal erreicht und gehalten, so wird er einer oberen Anschlagstellung zugeordnet und die Lieferskalierung zur Betriebsskalierung transformiert, womit die datentechnische Initialisierung des Stellglieds abgeschlossen ist.

Bei der Weiterbildung nach Anspruch 10 kann das Warnsignal in einfacher Weise z.B. an einer ohnehin Warneinrichtung des Geräts, z.B. der Blinkanlage eines Automobils ausgelöst werden

Ein Ausführungsbeispiel der Erfindung ist in der Zeichnung dargestellt und wird im folgenden näher erläutert. Es zeigen:
- Figur 1: schematisiert eine partielle Seitenansicht einer Pedaleinrichtung eines Automobils mit einem wegaufnehmenden Sensor in einer Ausgangsstellung,
- Figur 2: die Teile nach Figur 1 in einer anderen Funktionsstellung,
- Figur 3: Verlaufsdiagramme der Sensorwerte bei sich ändernder Pedalstellung der Pedaleinrichtung nach Figur 1.

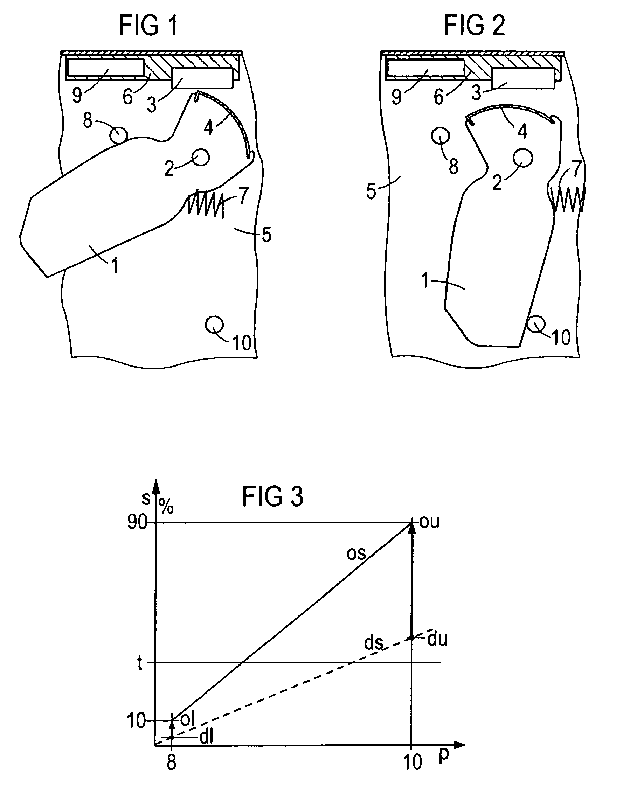

Nach Figur 1 ist ein mechanisch verstellbares Bauteil in Form eines als Bedienorgan dienenden Fußhebels 1 um eine Pedalachse 2 schwenkbar in einem Gehäuse 5 gelagert, das in den Fußraum eines Automobils einsetzbar ist. Oberhalb des Fußhebels 1 befindet sich ein stationär angebrachtes Spulenteil 3, das ein zum Fußhebel 1 hin gerichtetes elektromagnetisches Wechselfeld induziert. Das Spulenteil 3 ist Teil einer am Gehäuse befestigten Sensoreinrichtung 6, die am Gehäuse 5 befestigt ist und die eine Auswerteelektronik 9 für das Spulenteil enthält.

Am Fußhebel 1 ist ein Metallteil 4 angesetzt, das zusammen mit dem Spulenteil einen induktiven Sensor bildet und dessen Abstand zum Spulenteil 3 sich in Abhängigkeit von der Schwenkstellung des Fußhebels 1 ändert. Dies bewirkt eine entsprechende Änderung des induktiven Widerstand des Spulenteils 3, was zu einer entsprechenden Änderung der messbaren Verlustleistung des Spulenteils 3 führt. Das aus Blech gebogene Metallteil 4 weist eine konvexe nockenartige Krümmung auf, deren Verlauf so gestaltet ist, dass sich die Ausgangssignale des Sensors annähernd proportional zu Winkelstellung des Fußhebels 1 verändern.

In der gezeigten Ausgangsstellung liegt der Fußhebel gegen die Kraft einer Rückstellfeder 7 an einem Ruheanschlag 8 des Gehäuses 5 an und nimmt dabei eine Ruhestellung ein, deren Sensorwert einen entsprechenden Ausgangswert darstellt. Ein Ende des Metallteils 4 ist dem Spulenteil 3 eng benachbart und beeinflusst dessen elektromagnetisches Wechselfeld entsprechend stark.

Nach Figur 2 ist der Fußhebel an einen Endanschlag 10 in eine Funktionsstellung geschwenkt, in der der Abstand zum Spulenteil 3 erheblich vergrößert ist. Der induktive Widerstand des Spulenteils und damit der von der von der Auswerteelektronik 9 ausgegebene Sensorwert haben sich entsprechend geändert.

Figur 3 gibt den Verlauf der Sensorwerte s des Sensorsignals vor und nach dem Initialisieren des Pedals in Abhängigkeit von dessen Position p zwischen dem Ruheanschlag 8 und dem Endanschlag 10 wieder, wobei eine lineare Lieferskalierung ds die vom Hersteller der Sensoreinrichtung eingestellten Sensorwerte und eine Betriebsskalierung os transformierte Sensorwerte abbildet. Die maximalen Werte der noch nicht initialisierten Sensoreinrichtung in der Lieferskalierung liegen bei 50% der Betriebsskalierung.

Nach dem Einbau des Sensors in das Pedalwerk und dem Einschalten der Stromversorgung wird das Pedal aus dem Ruheanschlag 8 mit dem Sensorwert dl bis zum Endanschlag mit dem Sensorwert du durchgedrückt, wobei mit dem Überschreiten des deutlich unterhalb des Sensorwertes du gelegenen Schwellwertes t ein Justierprogramm der Steuer- und Auswerteelektronik gestartet wird und das Verweilen der Sensorwerte du und anschließend dl dem Endanschlag bzw. dem Ruheanschlag zugeordnet wird. Diese Werte müssen dann durch zumindest einen weiteren Bedienzyklus mit Erreichen der Anschläge bestätigt werden. Daraufhin wird durch die Auswerteelektronik die Lieferskalierung zur Bedienskalierung mit annähernd gedoppelten Sensorwerten transformiert, wobei der Sensorwert dl des Ruheanschlags 8 nach ol und der Sensorwert ol des Endanschlags 10 nach ou verschoben wird und der lineare Bezug zur Pedalstellung erhalten bleibt. Werden die vorgegebenen Bedienzyklen nicht vollendet, so bleibt die Lieferskalierung unverändert, was bei späteren Bedienphasen sicher detektiert werden kann und ein entsprechendes Warnsignal auslöst.

Bezugszeichen
- 1: Fußhebel
- 2: Pedalachse
- 3: Spulenteil
- 4: Metallteil
- 5: Gehäuse
- 6: Sensoreinrichtung
- 7: Rückstellfeder
- 8: Ruheanschlag
- 9: Auswerteelektronik
- 10: Endanschlag
- s: Sensorwert
- t: Schwellwert
- p: Position
- os: Betriebsskalierung
- ds: Lieferskalierung

## Patentansprüche

1. Sensoreinrichtung (3) zum Messen einer physikalischen Größe bei einem Gerät,
wobei ein ausgegebenes Sensorsignal zur Anpassung an den tatsächlichen Messbereich der Größe mittels einer Auswerteelektronik (9) skalierbar ist,
**dadurch gekennzeichnet**, das Sensorsignal vor dem Einbau in das Gerät Eigenschaften aufweist, die sich vom normalen Sensorsignal der betriebsbereiten Sensoreinrichtung deutlich unterscheiden und dass das Sensorsignal des eingebauten Sensors bei der ersten Skalierung des Sensors auf normale Eigenschaften umstellbar ist.

2. Sensoreinrichtung nach Anspruch 1, **dadurch gekennzeichnet, dass** das Sensorsignal eine Trägerfrequenz aufweist, die bei der Erstskalierung des Sensors von einer voreingestellten Lieferfrequenz in deutlich abweichende definierte Betriebsfrequenz umwandelbar ist.

3. Sensoreinrichtung nach Anspruch 1, **dadurch gekennzeichnet, dass** die Sensoreinrichtung (6) vor dem Einbau in das Gerät eine Lieferskalierung (ds) mit einem Grenzwert (du) des Sensorsignals aufweist, der deutlich außerhalb des entsprechenden Grenzwertbereichs (ou) der endgültig skalierten betriebsbereiten Sensoreinrichtung (6) liegt.

4. Sensoreinrichtung nach Anspruch 3, **dadurch gekennzeichnet, dass** die Lieferskalierung (ds) die Werte physikalische Größe in einem definierten Kurvenverlauf wiedergibt.

5. Sensoreinrichtung nach Anspruch 3 oder 4, **dadurch gekennzeichnet, dass** der Maximalwert (du) des Sensorsignals der Lieferskalierung (ds) deutlich unterhalb des maximalen Wertes (ou) des Sensorsignals der betriebsbereit skalierten Sensoreinrichtung (6) liegt.

6. Sensoreinrichtung nach Anspruch 3, 4 oder 5, **dadurch gekennzeichnet, dass** die Sensoreinrichtung (6) die Stellung eines mechanischen Stellgliedes erfasst, dessen Verstellbereich durch Anschläge begrenzt ist.

7. Sensoreinrichtung nach einem der Ansprüche 1 bis 6, **dadurch gekennzeichnet, dass** die Auswerteelektronik (9) eine Kontrolleinrichtung zur Initialisierung und Steuerung des Justierablaufs aufweist.

8. Verfahren zum Justieren einer skalierbaren Sensoreinrichtung (6) nach einem der vorhergehenden Ansprüche, **dadurch gekennzeichnet, dass** ein Verweilen des Sensorwertes außerhalb eines vorgegebenen Schwellwertes (t) der Lieferskalierung (ds) als Endstellung des endmontierten Stellglieds bewertet wird.

9. Verfahren nach Anspruch 8, **dadurch gekennzeichnet, dass** die Betriebsskalierung (os) bzw. die definierte Betriebfrequenz der Sensoreinrichtung (6) erst nach einer wiederholt detektierten Endstellung eingestellt wird.

10. Verfahren nach Anspruch 8 oder 9, **dadurch gekennzeichnet, dass** die Kontrolleinrichtung bei nicht erfolgreicher Initialisierung ein Kontrollsignal zum Auslösen eines Warnsignals an einem internen oder externen Signalisierungselement erzeugt.
